(19) Europäisches Patentamt
European Patent Office
Office européen des brevets

(11) **EP 4 303 832 A1**

(12) **EUROPEAN PATENT APPLICATION**

(43) Date of publication:
**10.01.2024  Bulletin 2024/02**

(21) Application number: **23180229.9**

(22) Date of filing: **20.06.2023**

(51) International Patent Classification (IPC):
***G06V 20/52*** *(2022.01)*     ***G06V 20/40*** *(2022.01)*
***G06V 40/10*** *(2022.01)*

(52) Cooperative Patent Classification (CPC):
**G06V 20/52; G06V 20/44; G06V 40/10**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.07.2022  US 202217861135**

(71) Applicant: **Honeywell International Inc.
Charlotte, NC 28202 (US)**

(72) Inventors:
• **MAHAJAN, Aishwarya
  Charlotte, 28202 (US)**

• **RAO, Manjuprakash Rama
  Charlotte, 28202 (US)**
• **MANJIYIL, Joe
  Charlotte, 28202 (US)**
• **JAIN, Abhisekh
  Charlotte, 28202 (US)**
• **PALADUGULA, Sri Harsha
  Charlotte, 28202 (US)**

(74) Representative: **Haseltine Lake Kempner LLP
Cheapside House
138 Cheapside
London EC2V 6BJ (GB)**

(54) **IDENTIFYING AND TRACKING ABANDONED  OBJECTS USING VIDEO ANALYTICS**

(57)     A method for detecting an abandoned object in a video stream captured by a video camera includes receiving a plurality of video frames of the video stream. Video analytics are performed on one or more of the plurality of video frames to detect one or more objects and one or more persons in the video stream. An object-person association between one of the detected objects and one of the detected persons is identified, resulting in an object/person pair. With the object-person pair identified, the object of the object/person pair and the person of the object/person pair are each tracked through subsequent video frames. Based on the tracking of the object of the object/person pair and the tracking of the person of the object/person pair, a determination is made as to when the object of the object/person pair becomes abandoned by the person of the object/person pair.

18

Receiving a plurality of video frames of the video stream — 20

Performing video analytics on one or more of the plurality of video frames to detect one or more objects in the video stream — 22

Performing video analytics on one or more of the plurality of video frames to detect one or more persons in the video stream — 24

Identifying an object-person association between one of the objects detected in the video stream and one of the persons detected in the video stream, resulting in an object/person pair — 26

Sphere of influence — 26a

With the object-person pair identified, tracking the object of the object/person pair and the person of the object/person pair through subsequent video frames — 28

To FIG. 2B

FIG. 2A

EP 4 303 832 A1

## Description

Technical Field

The present disclosure relates to security systems, and more particularly, to security systems that are configured to identify and track abandoned objects.

Background

Security systems often employ a number of different security system components that are useful in monitoring and/or controlling access to an area that is covered by the security system. In some cases, the security system components including video cameras. Detecting abandoned objects can be a priority in the surveillance of threats at public and private crowded places such as airport, stadium, station, and buildings. Some abandoned objects are simply left behind by a person through simple error or forgetfulness. However, some abandoned objects can present a threat to those in the surveilled area. For example, a backpack or duffel bag left in a crowded lobby or area could contain a bomb. What would be desirable would be a security system that is able to identify and track abandoned objects using video analytics, including determining who abandoned the abandoned object(s).

Summary

This disclosure relates to security systems, and more particularly, to security systems that are configured to detect and track abandoned objects using video analytics. An example may be found in a method for identifying an abandoned object in a video stream captured by a video camera. The illustrative method includes receiving a plurality of video frames of the video stream. Video analytics are performed on one or more of the plurality of video frames to detect one or more objects in the video stream. Video analytics are also performed on one or more of the plurality of video frames to detect one or more persons in the video stream. An object-person association between one of the objects detected in the video stream and one of the persons detected in the video stream is identified, resulting in an object/person pair. With the object-person pair identified, the object of the object/person pair and the person of the object/person pair are each tracked through subsequent video frames. Based on the tracking of the object of the object/person pair and the tracking of the person of the object/person pair, a determination is made as to when the object of the object/person pair becomes abandoned by the person of the object/person pair.

Another example may be found in a method for detecting an abandoned object within a video stream. The illustrative method includes receiving a plurality of video frames of the video stream. Video analytics are performed on one or more of the plurality of video frames to detect possible objects of interest. Video analytics are performed on one or more of the plurality of video frames to detect a person believed to be associated with each of the possible objects of interest. Each possible object of interest and the associated person are tracked through subsequent video frames. The illustrative method further includes detecting that one or more of the possible objects of interest have been abandoned by the person believed to be associated with that possible object of interest. The abandoned object is continued to be tracked. The person believed to be associated with the abandoned object is tracked to see if the person returns to the abandoned object. An alert is raised when the person believed to be associated with the abandoned object does not return to the abandoned object within a threshold period of time.

Another example may be found in a security system. The illustrative security system includes a video camera for producing a video stream and a controller that is operably coupled to the video camera. The controller is configured to receive a plurality of video frames of the video stream, perform video analytics on one or more of the plurality of video frames to detect one or more objects in the video stream, and perform video analytics on one or more of the plurality of video frames to detect one or more persons in the video stream. The controller is configured to identify an object-person association between one of the objects detected in the video stream and one of the persons detected in the video stream, resulting in an object/person pair, and to track the object of the object/person pair and the person of the object/person pair through subsequent video frames. Based on the track of the object of the object/person pair and the track of the person of the object/person pair, the controller is configured to determine when the object of the object/person pair becomes abandoned by the person of the object/person pair, and to issue an alert when the object of the object/person pair becomes abandoned by the person of the object/person pair.

The preceding summary is provided to facilitate an understanding of some of the features of the present disclosure and is not intended to be a full description. A full appreciation of the disclosure can be gained by taking the entire specification, claims, drawings, and abstract as a whole.

Brief Description of the Drawings

The disclosure may be more completely understood in consideration of the following description of various illustrative embodiments of the disclosure in connection with the accompanying drawings, in which:

Figure 1 is a schematic block diagram of an illustrative security system;
Figures 2A and 2B are flow diagrams that together show an illustrative method that may be carried out by the illustrative security system of Figure 1;
Figures 3A and 3B are flow diagrams that together show an illustrative method that may be carried out by the illustrative security system of Figure 1;
Figure 4 is a flow diagram showing an illustrative method that may be carried out by the illustrative security system of Figure 1;
Figure 5 is a flow diagram showing an illustrative method that may be carried out by the illustrative security system of Figure 1;
Figure 6 is a flow diagram showing an illustrative method that may be carried out by the illustrative security system of Figure 1;
Figures 7A and 7B are flow diagrams that together show an illustrative method that may be carried out by the illustrative security system of Figure 1;
Figures 8A and 8B are flow diagrams that together show an illustrative method that may be carried out by the illustrative security system of Figure 1;
Figures 9A and 9B are flow diagrams that together show an illustrative method that may be carried out by the illustrative security system of Figure 1;
Figures 10A and 10B are flow diagrams that together show an illustrative method that may be carried out by the illustrative security system of Figure 1; and
Figures 11A and 11B are flow diagrams that together show an illustrative method that may be carried out by the illustrative security system of Figure 1.

While the disclosure is amenable to various modifications and alternative forms, specifics thereof have been shown by way of example in the drawings and will be described in detail. It should be understood, however, that the intention is not to limit aspects of the disclosure to the particular illustrative embodiments described. On the contrary, the intention is to cover all modifications, equivalents, and alternatives falling within the spirit and scope of the disclosure.

Description

The following description should be read with reference to the drawings wherein like reference numerals indicate like elements. The drawings, which are not necessarily to scale, are not intended to limit the scope of the disclosure. In some of the figures, elements not believed necessary to an understanding of relationships among illustrated components may have been omitted for clarity.
All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).
As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.
It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

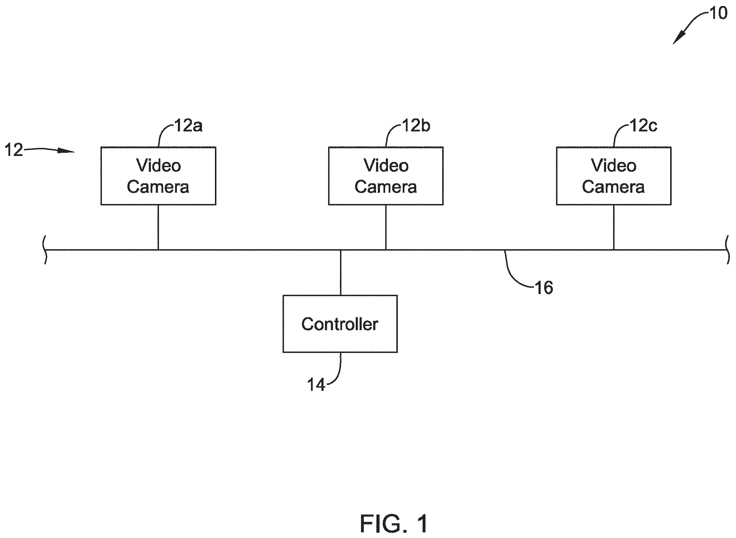

Figure 1 is a schematic block diagram of an illustrative security system 10. The illustrative security system 10 may include a number of video cameras 12, individually labeled as 12a, 12 and 12c. While a total of three video cameras 12 are shown, this is merely illustrative. In some cases, the security system 10 may only have one video camera 12, or two video cameras 12. In some cases, the security system 10 may have a large number of video cameras 12. Each of the video cameras 12 provide a video stream including a plurality of video frames. In some cases, the security system 10 may be considered a surveillance system. In some instances, the phrase "security system" and "surveillance system" may be used interchangeably.
A controller 14 is operably coupled to the video cameras 12 via a network 16. The network 16 may be a wired network or a wireless network, for example. In some cases, the network 16 may be part of a building management system (BMS) network. In some cases, the network 16 may be a standalone network dedicated to the security system 10, while in other cases, the network 16 may be an IT network or a combination IT network and BMS network.

The controller 14 is configured to receive a plurality of video frames of the video stream from one or more of the video cameras 12 and to perform video analytics on one or more of the plurality of video frames to detect one or more objects in the video stream, as well as to detect one or more persons in the video stream. In some cases, detecting an object may include identifying one or more characteristics of the object that may be used in finding that object in subsequent frames, thereby making it easier to track the object. In some cases, detecting one or more persons may include identifying one or more characteristics of the person that may be used in finding that person in subsequent frames, thereby making it easier to track the person. In the example of Figure 1, the controller 14 is further configured to identify an object-person association between one of the objects detected in the video stream and one of the persons detected in the video stream, resulting in an object/person pair and to track the object of the object/person pair and the person of the object/person pair through subsequent video frames of the video stream. In some cases, an image corresponding to a first occurrence of the object-person association may be archived for future processing. In some cases, for every abandoned object, one or more evidence images of the abandoned object and the associated person may be stored for later reference.

In some cases, attribute recognition may be performed in order to better track a person, who may for example be associated with a particular object such as an abandoned object, through subsequent video frames. Attribute recognition may include recognizing particular attributes pertaining to clothing that the person is wearing, the size of the person, the age of the person and the gender of the person, for example. Clothing-related attributes may include upper clothing color, lower clothing color, long sleeves, short sleeves, long pants and short pants, for example. Attribute recognition may include recognizing a person's age (adult/child) and/or gender (male/female. Any combination of these and other attributes may be used in tracking a person through multiple video frames.

In some cases, the object of the object/person pair and/or the person of the object/person pair may be tracked across the video streams of the plurality of video cameras 12a-12c. For example, the person of the object/person pair may be first detected in the video stream of a first video camera 12a, but as the person moves about the facility, the person may move out of the field of view of the first video camera 12a and into the field of view of a second video camera 12b. The controller 14 may be configured to track the person of the object/person pair across the video streams of the plurality of video cameras 12a-12c. Alternative, or in addition, the controller 14 may be configured to track the object of the object/person pair across the video streams of the plurality of video cameras 12a-12c.

Based on continuing to track of the object of the object/person pair and continuing to track the person of the object/person pair, the controller 14 is configured to determine when the object of the object/person pair becomes abandoned by the person of the object/person pair, and to issue an alert when the object of the object/person pair becomes abandoned by the person of the object/person pair. As an example, the alert may identify the abandoned object of the object/person pair, and the person that abandoned the object of the object/person pair. In some cases, the controller 14 may be further configured to archive an image of the abandoned object of the object/person pair and an image of the person that abandoned the object of the object/person pair when the object of the object/person pair becomes abandoned by the person of the object/person pair. In some cases, the alert may include a current location of the object of the object/person pair and/or a current location of the person of the object/person pair. In some cases, the alert may include an additional archived image of the first object-person association.

In some cases, and after the object of the object/person pair becomes abandoned by the person of the object/person pair, the controller 14 is configured to continue to track the abandoned object of the object/person pair and to continue to track the person that abandoned the object of the object/person pair. Based on the continued tracking of the abandoned object of the object/person pair and the person that abandoned the object of the object/person pair, the controller 14 may be configured to determine whether the person that abandoned the object of the object/person pair returns to the abandoned object of the object/person pair, and if so, determines that the abandoned object of the object/person pair is no longer abandoned by the person of the object/person pair. This is just an example.

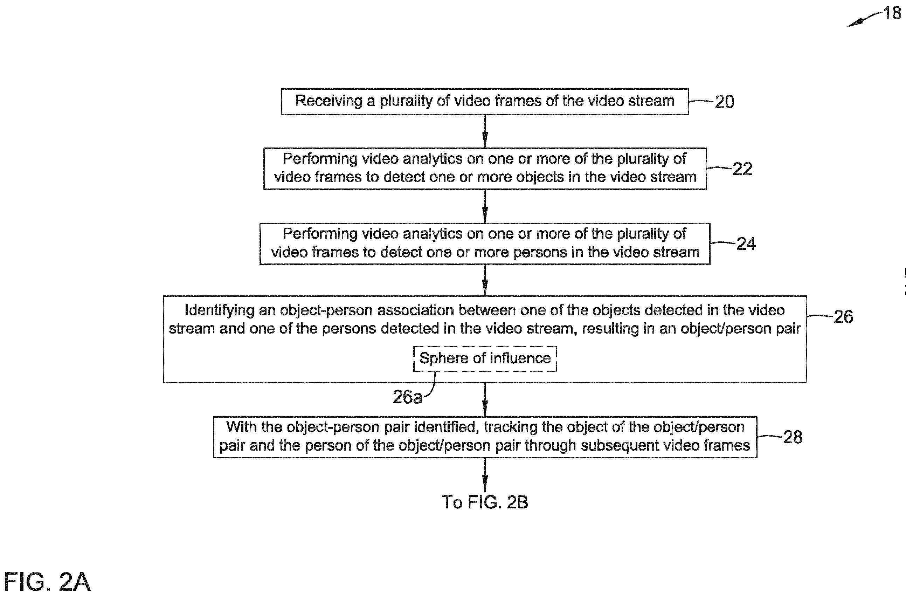

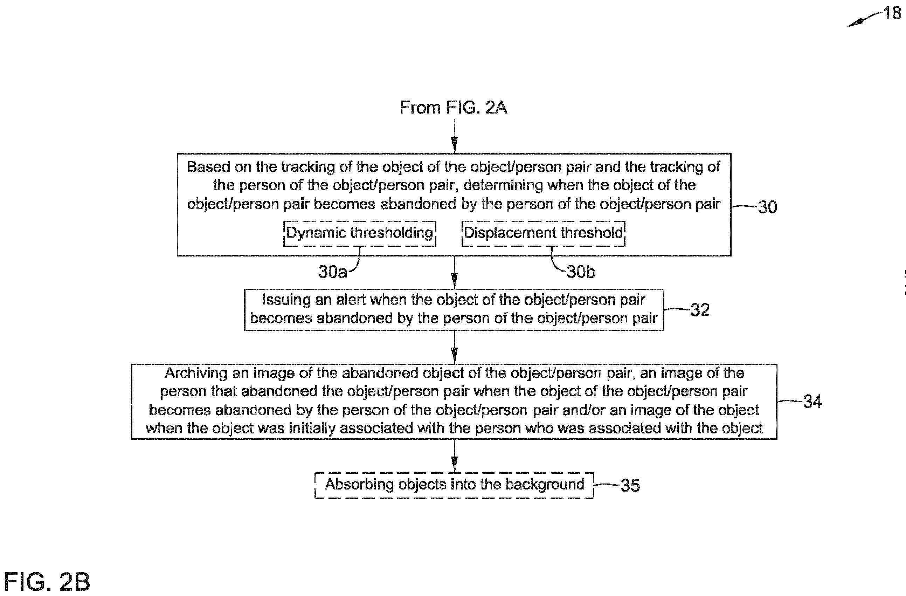

Figures 2A and 2B are flow diagrams that together show an illustrative method 18 for identifying an abandoned object in a video stream captured by a video camera (such as video camera 12a). The illustrative method 18 includes receiving a plurality of video frames of the video stream, as indicated at block 20. Video analytics are performed on one or more of the plurality of video frames to detect one or more objects in the video stream, as indicated at block 22. Video analytics are performed on one or more of the plurality of video frames to detect one or more persons in the video stream, as indicated at block 24. Video analytics to detect objects in a video stream and video analytics to detect persons in a video stream are known in the art. An object-person association between one of the objects detected in the video stream and one of the persons detected in the video stream is identified, resulting in an object/person pair, as indicated at block 26. With the object-person pair identified, the object of the object/person pair and the person of the object/person pair are both tracked through subsequent video frames, as indicated at block 28.

Continuing on Figure 2B, and based on the tracking of the object of the object/person pair and the tracking of the person of the object/person pair, a determination is made as to when the object of the object/person pair becomes abandoned by the person of the object/person pair, as indicated at block 30. For example, if the person of the object/person pair becomes separated from the object of the object/person pair by more than a threshold distance and for more than a threshold time, it may be determined that the object of the object/person pair becomes abandoned by the person of the object/person pair. In some cases, the threshold distance may be based on the size of the object (e.g. number of pixels) so to as to scale the separation distance to take into account the distance that the object and/or person of the object/person pair are from the video camera.

In some cases, and as indicated at block 30a, dynamic thresholding may be used in determining what the threshold distance is, for example. If an object is in the foreground of a video frame, that object will appear relatively larger and will consume a relatively larger number of pixels. A similarly sized object in the background of a video frame will appear relatively smaller, and will consume a relatively smaller number of pixels. A movement of three (as an example) pixels for the object (or bounding box around the object) in the foreground may barely count as movement, while the same movement of three pixels for the object (or bounding box around the object) in the background may count as a significant movement.

For an object to be abandoned, it is required to be stationary for a least a period of time. To determine whether the object has moved or is stationary, a continual check is performed as to whether the object is displaced or not from a prior frame, as indicated at block 30b. For each object, a relative displacement for a current and a previous frame is computed. Those objects that have a relative displacement that is less than a displacement threshold are considered for favorable candidate stationary objects.

While addressing the candidate stationary object, having a fix displacement threshold may be simple, but may limit the scalability of identifying movement in the video stream. For example, when the person is in the far field of view, a small pixel distance will translate to a large physical displacement distance and vice versa when the person/object is in the near field of view. Accordingly, the relative size of the object or person, or bounding box around either the object or the person, may be used in determining the displacement threshold used for determining whether an object is stationary or not. As an example, and in some cases, the minimum length of the sides of the bounding box of an object may be determined, and a particular percentage of that minimum length may be selected as the displacement threshold. For example, the displacement (or distance) threshold may be set equal to 8% of the minimum length, although other percentages are contemplated.

Likewise, and in some cases, dynamic thresholding may be used to determine a virtual region of interest or sphere of influence, as indicated at block 2a, inside of which an object and a person are considered to be associated by virtue of the distance there between. In some cases, this may be addressed by dividing the field of view into three (or more) zones. In one example, a far field of view may defined as the top 8% of the height of the image, the near field of view may correspond to the bottom 10% of the height of the image, and the intervening zone, between the far field of view and the near field of view, may be considered the active field of view. In some cases, the virtual region of interest may then be dynamically ascertained based on the object height as follows:

For objects in the far field of view zone, the following equation may be used:

$$\text{virtual\_roi\_distance\_thresh} = 50 * (\text{image\_height}/1080).$$

For objects in the near field of view zone, the following equation may be used:

$$\text{virtual\_roi\_distance\_thresh} = 120 * (\text{image\_height}/1080).$$

For objects in the active field of view zone, the following equations may be used:

$$\text{image\_height\_remaining} = \text{image\_height} - (\text{image\_height} * 0.08) - (\text{image\_height} * 0.10);$$

$$\text{virtual\_roi\_distance\_thresh} = 50 + (\text{obj\_centroid\_height} - (\text{image\_height} * 0.08))*$$

$$\text{image\_height\_remaining},$$

where:

virtual_roi_distance_thresh is the radius of the virtual region of interest of which an object and a person are considered to be associated by virtue of the distance therebetween;
image_height is the pixelwise image/frame height of the frame received as the video sequences;
object_centroid_height is the pixelwise distance of the object center from the top of the object; and
image_height_remaining is the pixelwise remaining length excluding the near and far field of view zones.

In some cases, a sensitivity parameter may be used to dynamically scale the virtual region of interest. The sensitivity parameter may scale how far the person can move from an object without the object being considered abandoned. For example, it may be desirable for some areas of a facility to have a higher sensitivity than other areas of a facility. In some cases, the sensitivity parameter can be set to high sensitivity, medium sensitivity or low sensitivity. As an example:

$$\text{High Sensitivity means radius\_virtual\_roi} = 2^0 \ * \ \text{virtual\_roi\_distance\_thresh};$$

$$\text{Medium Sensitivity means radius\_virtual\_roi} = 2^1 \ * \ \text{virtual\_roi\_distance\_thresh},$$

and

$$\text{Low Sensitivity means radius\_virtual\_roi} = 2^2 \ * \ \text{virtual\_roi\_distance\_thresh}.$$

In some cases, and as indicated at block 35, stationary objects that were never associated with a person and never determined to be abandoned may be identified in a particular scene. Over time, it may be appropriate to absorb these objects into the background in order to reduce false positives. The number of abandoned events associated with detected objects that are not associated with a person, and were never associated with a person, is evaluated relative to a threshold number of observed events. Once the number of abandoned events exceed the threshold for a particular object, the subsequent abandoned object alarm events associated with that object is suppressed and may be considered as absorbing/merging the object into background. To merge/absorb the object, the features and color attributes of the object are compared with respect to the same position as an abandoned object is assumed to be stationary for the n-$2^{th}$, n-$1^{th}$ and $n^{th}$ event before it crossed the threshold count "n" for the event. If either of the comparison in between is matched, the object is marked for Absorption with the Background.

In some cases, the method 18 may include issuing an alert when the object of the object/person pair becomes abandoned by the person of the object/person pair, as indicated at block 32. As an example, the alert may identify the abandoned object of the object/person pair and/or the person that abandoned the object of the object/person pair. The method 18 may further include archiving an image of the abandoned object of the object/person pair, an image of the person that abandoned the object of the object/person pair when the object of the object/person pair becomes abandoned by the person of the object/person pair, and/or an image of the object when the object was initially associated with the person who was associated with the object, as indicated at block 34. In some cases, the alert may include a current location of the object of the object/person pair and/or a current location of the person of the object/person pair.

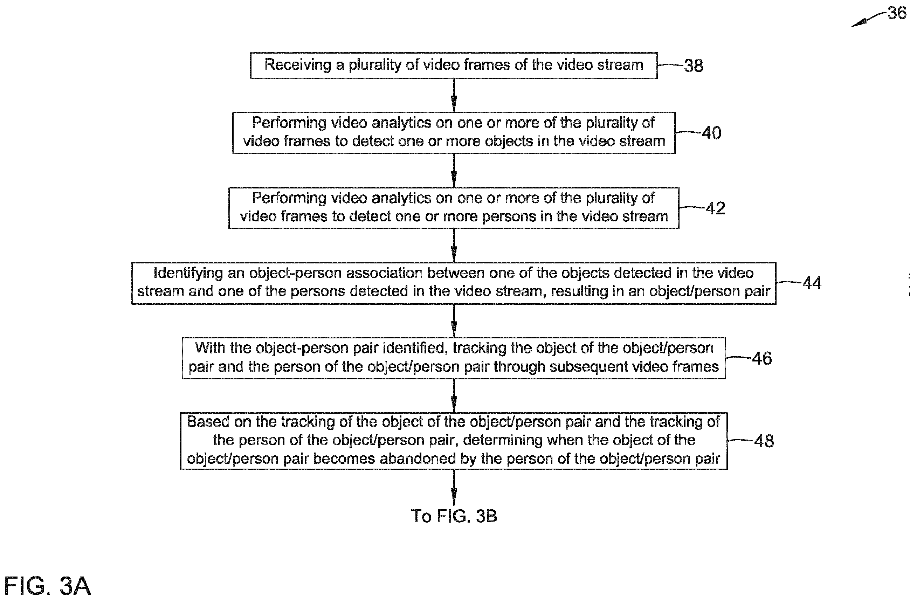

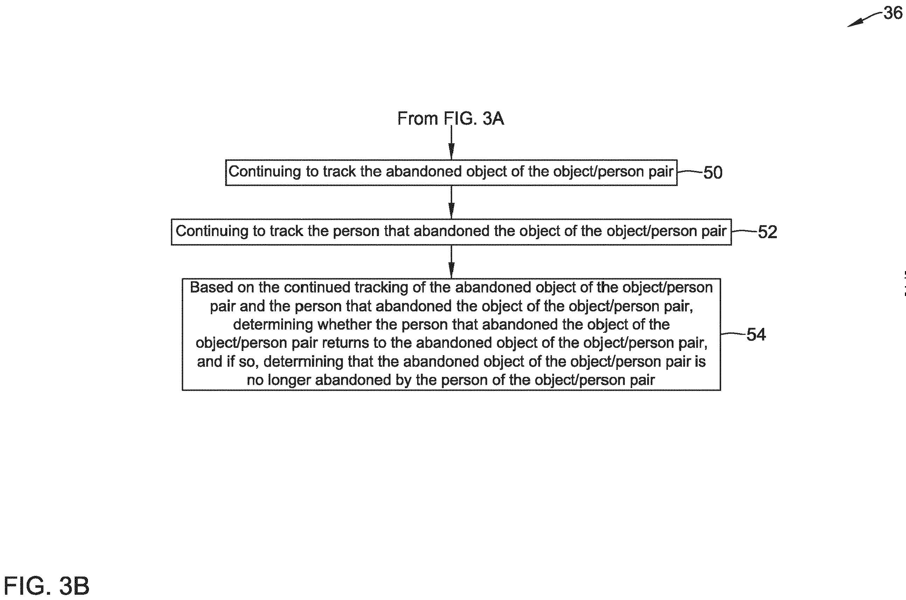

Figures 3A and 3B are flow diagrams that together show an illustrative method 36 for identifying an abandoned object in a video stream captured by a video camera (such as the video camera 12). The method 36 includes receiving a plurality of video frames of the video stream, as indicated at block 38. Video analytics are performed on one or more of the plurality of video frames to detect one or more objects in the video stream, as indicated at block 40. Video analytics are performed on one or more of the plurality of video frames to detect one or more persons in the video stream, as indicated at block 42.

An object-person association between one of the objects detected in the video stream and a person detected in the video stream is identified, resulting in an object/person pair, as indicated at block 44. With the object-person pair identified, the object of the object/person pair and the person of the object/person pair are both tracked through subsequent video frames, as indicated at block 46. Based on the tracking of the object of the object/person pair and the tracking of the person of the object/person pair, a determination is made as to when the object of the object/person pair becomes abandoned by the person of the object/person pair, as indicated at block 50.

The illustrative method 36 continues in Figure 3B, which outlines steps taken after the object of the object/person pair becomes abandoned by the person of the object/person pair. The method 36 includes continuing to track the abandoned object of the object/person pair, as indicated at block 50, and continuing to track the person that abandoned the object of the object/person pair, as indicated at block 52. Based on the continued tracking of the abandoned object of the object/person pair and the continued tracking of the person that abandoned the object of the object/person pair, a determination is made as to whether the person that abandoned the object of the object/person pair returns to the abandoned object of the object/person pair, and if so, a determination is made that the abandoned object of the object/person pair is no longer abandoned by the person of the object/person pair, as indicated at block 54.

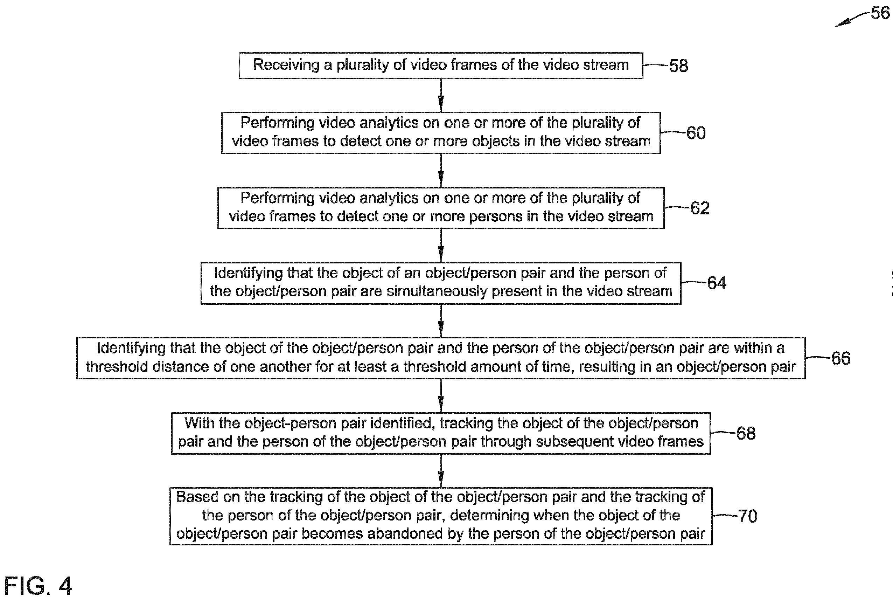

Figure 4 is a flow diagram showing an illustrative method 56 for detecting an abandoned object in a video stream captured by a video camera (such as the video camera 12). The illustrative method 56 includes receiving a plurality of video frames of the video stream, as indicated at block 58. Video analytics are performed on one or more of the plurality of video frames to detect one or more objects in the video stream, as indicated at block 60. Video analytics are performed on one or more of the plurality of video frames to detect one or more persons in the video stream, as indicated at block 62.

The method 56 includes identifying a candidate object of a candidate object/person pair and a candidate person of the candidate object/person pair are simultaneously present in the video stream, as indicated at block 64. The method 56 further includes identifying that the candidate object of the candidate object/person pair and the candidate person of the candidate object/person pair are within a threshold distance of one another for at least a threshold amount of time. When these conditions are satisfied, sometimes in combination with other satisfied conditions, the method may identify that the candidate object and the candidate person are associated as object/person pair, as indicated at block 66.

With the object-person pair identified, the object of the object/person pair and the person of the object/person pair are both tracked through subsequent video frames, as indicated at block 68. Based on the tracking of the object of the object/person pair and the tracking of the person of the object/person pair, a determination is made as to when the object of the object/person pair becomes abandoned by the person of the object/person pair, as indicated at block 70.

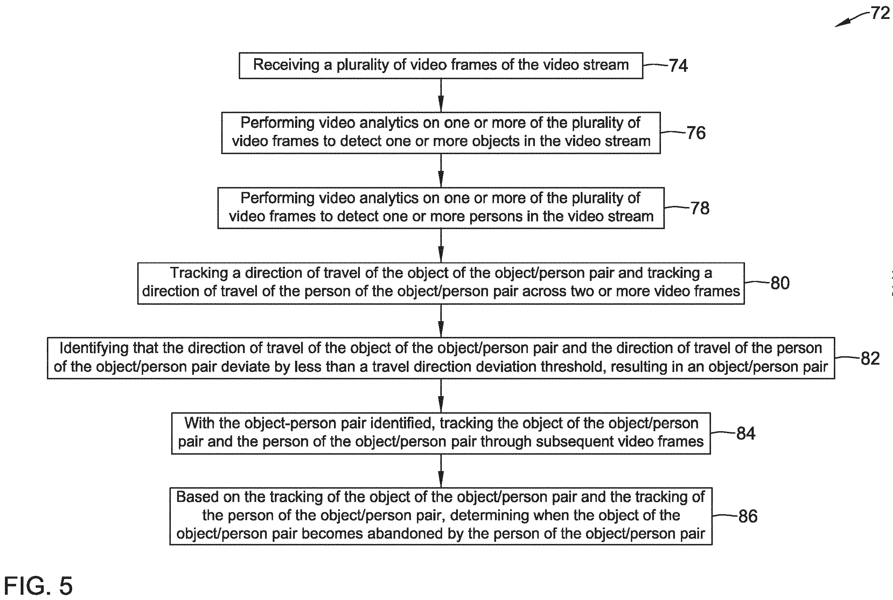

Figure 5 is a flow diagram showing an illustrative method 72 for identifying an abandoned object in a video stream captured by a video camera (such as a video camera 12a). The illustrative method 72 includes receiving a plurality of video frames of the video stream, as indicated at block 74. Video analytics are performed on one or more of the plurality of video frames to detect one or more objects in the video stream, as indicated at block 76. Video analytics are performed on one or more of the plurality of video frames to detect one or more persons in the video stream, as indicated at block 78.

The method 72 further includes tracking a direction of travel of a candidate object of a candidate object/person pair and tracking a direction of travel of a candidate person of the candidate object/person pair across two or more video frames, as indicated at block 80. The method 72 includes identifying that the direction of travel of the candidate object of the object/person pair and the direction of travel of the candidate person of the object/person pair deviate by less than a travel direction deviation threshold. When this condition is satisfied, sometimes with other conditions, the method may determine that the candidate object and the candidate person are associated as object/person pair, as indicated at block 82.

With the object-person pair identified, the object of the object/person pair and the person of the object/person pair are both tracked through subsequent video frames, as indicated at block 84. Based on the tracking of the object of the object/person pair and the tracking of the person of the object/person pair, a determination is made as to when the object of the object/person pair becomes abandoned by the person of the object/person pair, as indicated at block 86.

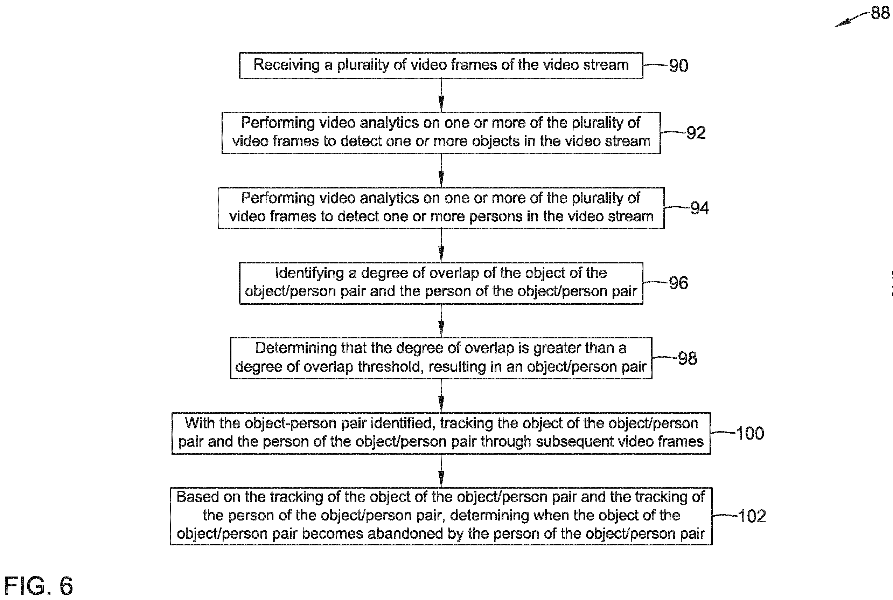

Figure 6 is a flow diagram showing an illustrative method 88 for identifying an abandoned object in a video stream captured by a video camera (such as a video camera 12a). The illustrative method 88 includes receiving a plurality of video frames of the video stream, as indicated at block 90. Video analytics are performed on one or more of the plurality of video frames to detect one or more objects in the video stream, as indicated at block 92. Video analytics are performed on one or more of the plurality of video frames to detect one or more persons in the video stream, as indicated at block 94.

The method 88 further includes identifying a degree of overlap of a candidate object of a candidate object/person pair and a candidate person of the candidate object/person pair, as indicated at block 96. For example, an object bounding box may be established about the candidate object and a person bound box may be established about the candidate person of the candidate object/person pair. The degree of overlap may be determined as the area of intersection of the object bounding box and the person bounding box, divided by the union of the object bounding box and the person bounding box. The method 88 includes determining that the degree of overlap is greater than a degree of overlap threshold. When this condition is satisfied, sometimes in combination with other satisfied conditions, the method may determine that the candidate object and the candidate person are associated as object/person pair, as indicated at block 98.

With the object-person pair identified, the object of the object/person pair and the person of the object/person pair are both tracked through subsequent video frames, as indicated at block 100. Based on the tracking of the object of the object/person pair and the tracking of the person of the object/person pair, a determination is made as to when the object of the object/person pair becomes abandoned by the person of the object/person pair, as indicated at block 102.

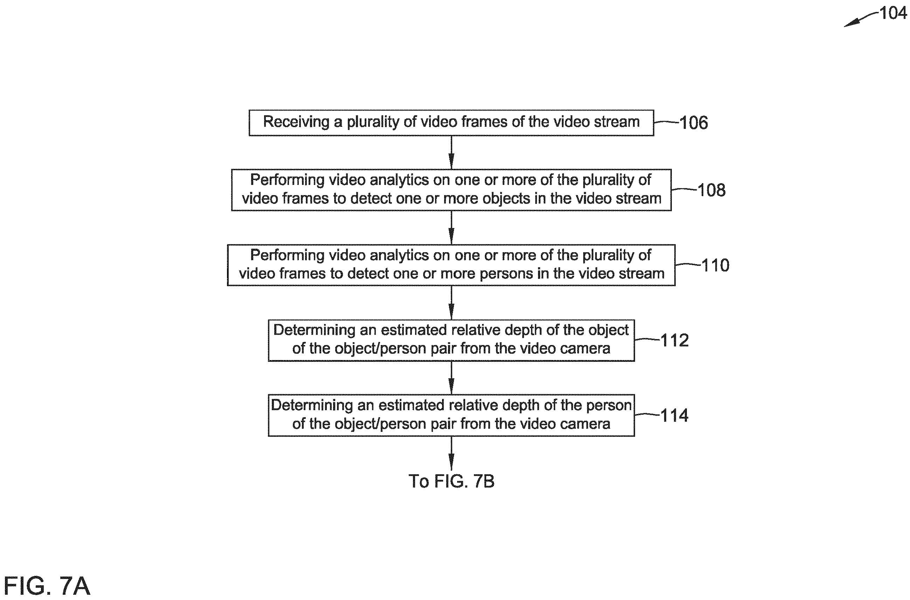

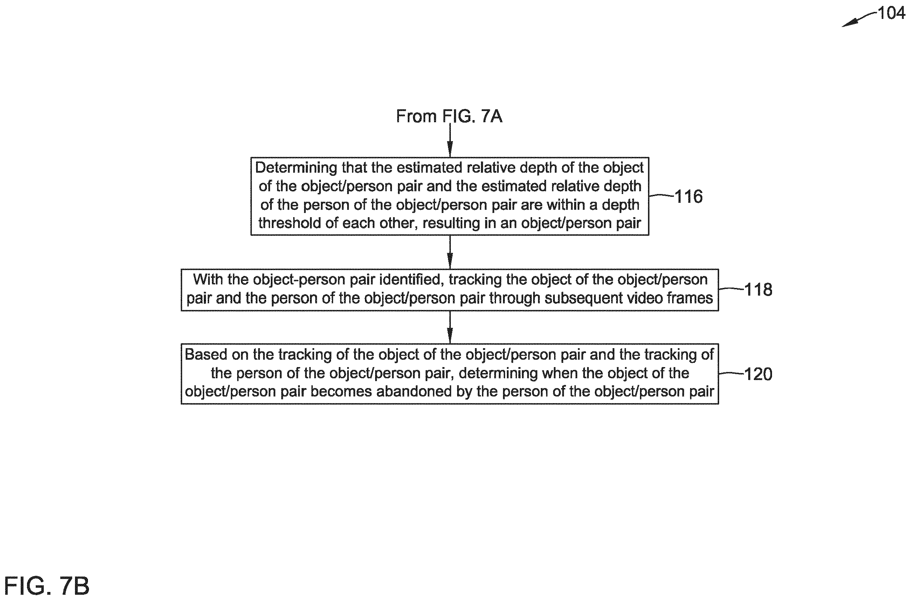

Figures 7A and 7B are flow diagrams that together show an illustrative method 104 for identifying an abandoned object in a video stream captured by a video camera (such as a video camera 12a). The illustrative method 104 includes receiving a plurality of video frames of the video stream, as indicated at block 106. Video analytics are performed on one or more of the plurality of video frames to detect one or more objects in the video stream, as indicated at block 108.

Video analytics are performed on one or more of the plurality of video frames to detect one or more persons in the video stream, as indicated at block 110.

The method 104 further includes determining an estimated relative depth of a candidate object of a candidate object/person pair from the video camera, as indicated at block 112, and determining an estimated relative depth of a candidate person of the candidate object/person pair from the video camera, as indicated at block 114. In one example, a depth map is initially determined for the frame using a depth estimator, which computes a depth from the camera for every pixel of the input frame and outputs relative distance values as a 2-dimensional map. A bounding box of the candidate object is then overlaid on the 2-dimensional distance map, and the estimated relative depth of the candidate object is computed using the corresponding values in the 2-dimensional distance map. Likewise, a bounding box of the candidate person is overlaid on the 2-dimensional distance map, and the estimated relative depth of the candidate person is computed using the corresponding values in the 2-dimensional distance map. The method 104 continues on Figure 7B, where the method 104 determines whether the estimated relative depth of the object of the object/person pair and the estimated relative depth of the person of the object/person pair are within a depth threshold of each other. When this condition is satisfied, sometimes in combination with other satisfied conditions, the method may determine that the candidate object and the candidate person are associated as object/person pair, as indicated at block 116.

With the object-person pair identified, the object of the object/person pair and the person of the object/person pair are both tracked through subsequent video frames, as indicated at block 118. Based on the tracking of the object of the object/person pair and the tracking of the person of the object/person pair, a determination is made as to when the object of the object/person pair becomes abandoned by the person of the object/person pair, as indicated at block 120.

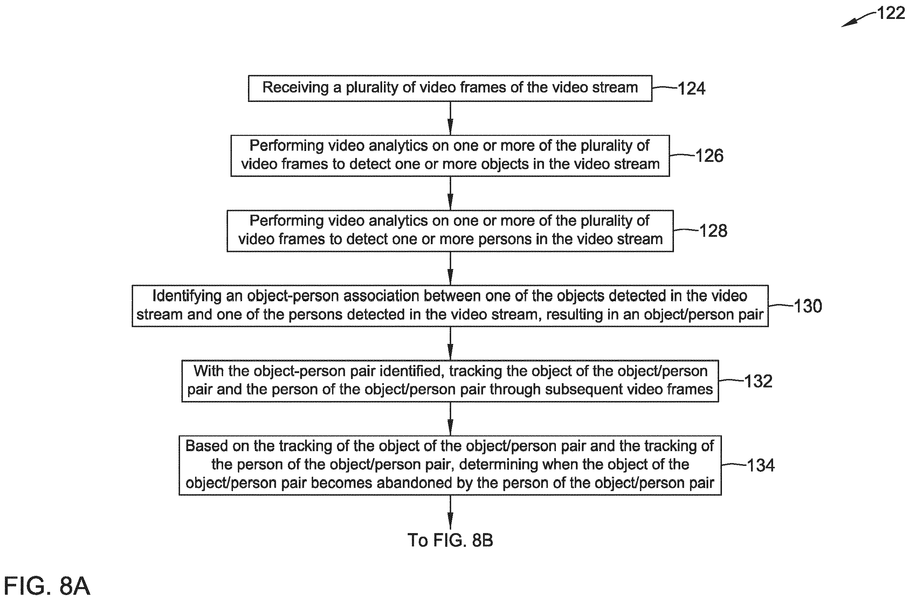

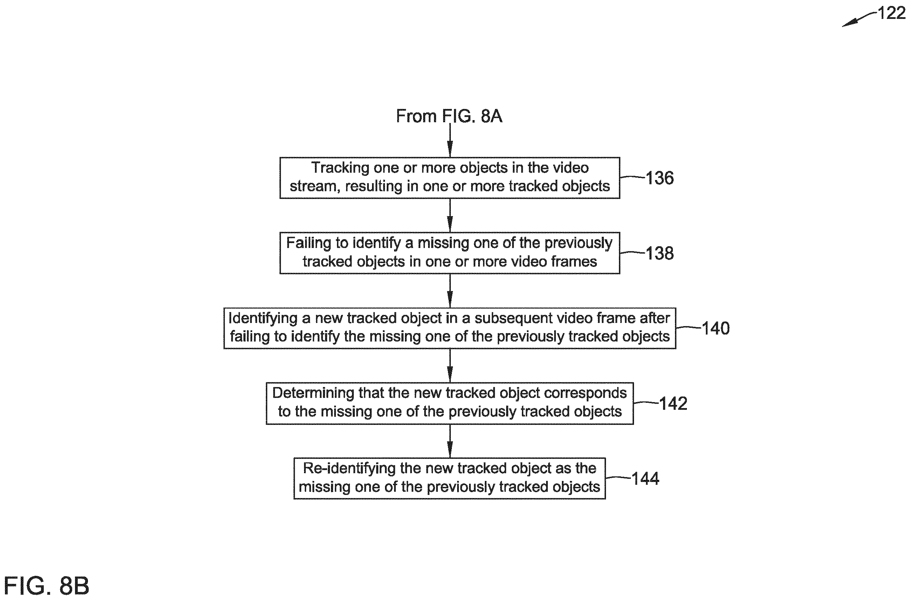

Figures 8A and 8B are flow diagrams that together show an illustrative method 122 for identifying an abandoned object in a video stream captured by a video camera (such as a video camera 12a). The method 122 includes receiving a plurality of video frames of the video stream, as indicated at block 124. Video analytics are performed on one or more of the plurality of video frames to detect one or more objects in the video stream, as indicated at block 126. Video analytics are performed on one or more of the plurality of video frames to detect one or more persons in the video stream, as indicated at block 128. An object-person association between one of the objects detected in the video stream and one of the persons detected in the video stream is identified, resulting in an object/person pair, as indicated at block 130.

With the object-person pair identified, the object of the object/person pair and the person of the object/person pair are both tracked through subsequent video frames, as indicated at block 132. Based on the tracking of the object of the object/person pair and the tracking of the person of the object/person pair, a determination is made as to when the object of the object/person pair becomes abandoned by the person of the object/person pair, as indicated at block 134.

The method 122 continues on Figure 8B. As indicated above, one or more objects in the video stream are tracked, which results in one or more tracked objects as indicated at block 136. The method 122 includes failing to identify a missing one of the previously tracked objects in one or more video frames, as indicated at block 138. The previously tracked object may, for example, become temporarily obstructed from view. Later, a new tracked object is identified in a subsequent video frame after failing to identify the missing one of the previously tracked objects, as indicated at block 140. A determination is made as to whether the new tracked object corresponds to the missing one of the previously tracked objects, as indicated at block 142. As an example, this may be accomplished by feature matching between the missing one of the previously tracked objects and the new tracked object, RGB matching (mean RBG values) between the missing one of the previously tracked objects and the new tracked object, and/or angle of inclination matching between an angle of inclination of the missing one of the previously tracked objects in the frame and the angle of inclination of the new tracked object. If it is determined that the new tracked object corresponds to the missing one of the previously tracked objects, the new tracked object is re-identified as the missing one of the previously tracked objects, as indicated at block 144, and the object/person pair is updated.

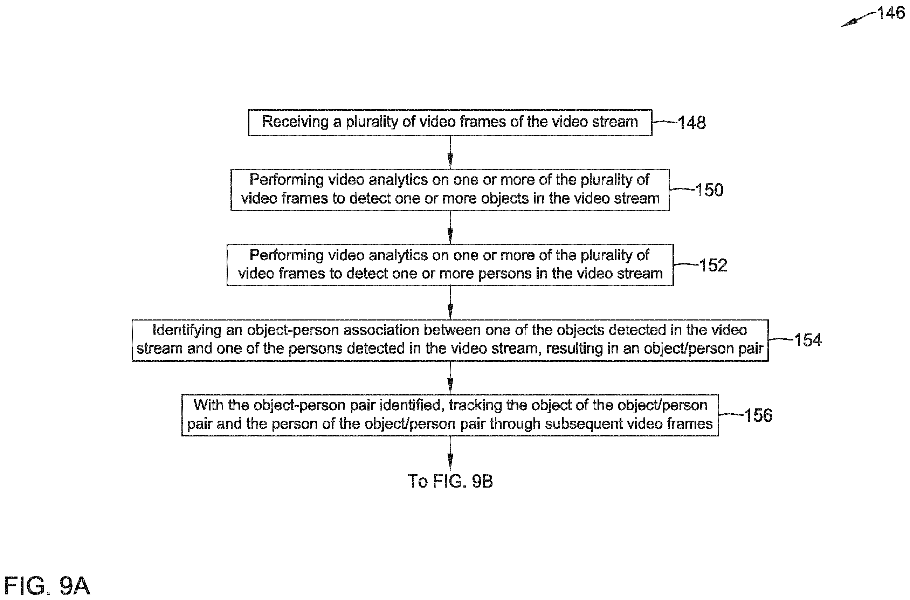

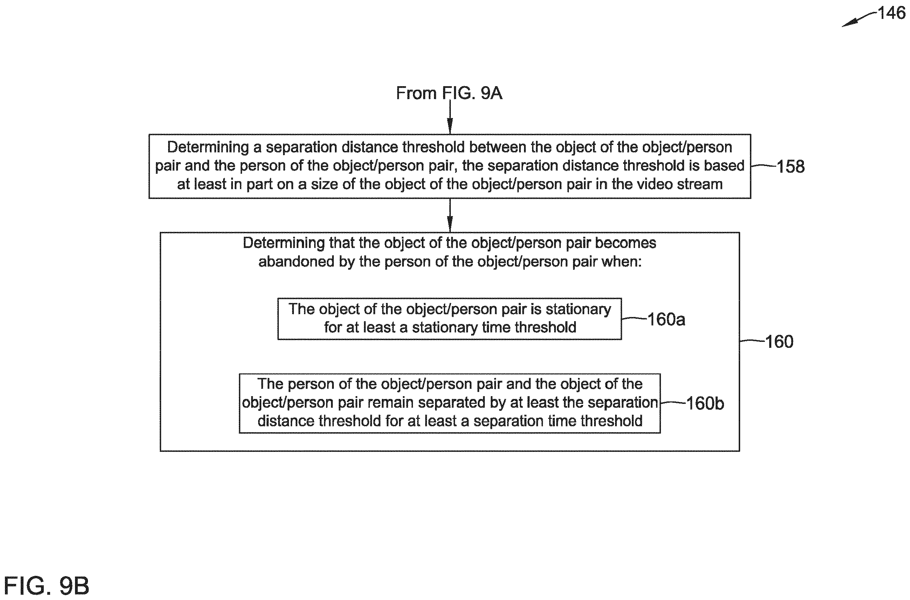

Figures 9A and 9B are flow diagrams that together show an illustrative method 146 of identifying an abandoned object in a video stream captured by a video camera (such as the video camera 12). The method 146 includes receiving a plurality of video frames of the video stream, as indicated at block 148. Video analytics are performed on one or more of the plurality of video frames to detect one or more objects in the video stream, as indicated at block 150. Video analytics are performed on one or more of the plurality of video frames to detect one or more persons in the video stream, as indicated at block 152. An object-person association between one of the objects detected in the video stream and one of the persons detected in the video stream is identified, resulting in an object/person pair, as indicated at block 154. With the object-person pair identified, the object of the object/person pair and the person of the object/person pair are both tracked through subsequent video frames, as indicated at block 156.

The method 146 continues on Figure 9B, in which a determination has been made that the object of the object/person pair has become abandoned by the person of the object/person pair. The method 146 includes determining a separation distance threshold between the object of the object/person pair and the person of the object/person pair. The separation distance threshold is based at least in part on a size of the object of the object/person pair in the video stream, as indicated at block 158. For example, in some cases, a bounding box may be defined around the object of the object/person pair, and the separation distance threshold may be set as the area of a circle with a radius that is equal to the length of the longest diagonal distance of the bunding box. By having the separation distance threshold based on the size of the object (e.g. number of pixels), the separation distance threshold may be automatically scaled to take into account the distance that the object of the object/person pair is from the video camera.

The method 146 further includes determining that the object of the object/person pair becomes abandoned by the person of the object/person pair, as indicated at block 160. This determination is made when the object of the object/person pair is stationary for at least a stationary time threshold, as indicated at block 160a, and the person of the object/person pair and the object of the object/person pair remain separated by at least the separation distance threshold for at least a separation time threshold, as indicated at block 160b.

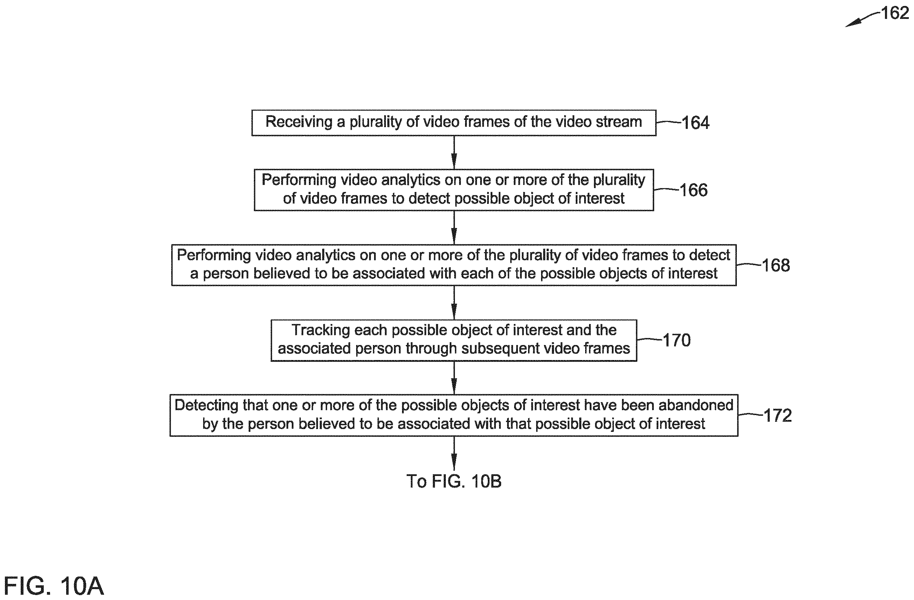

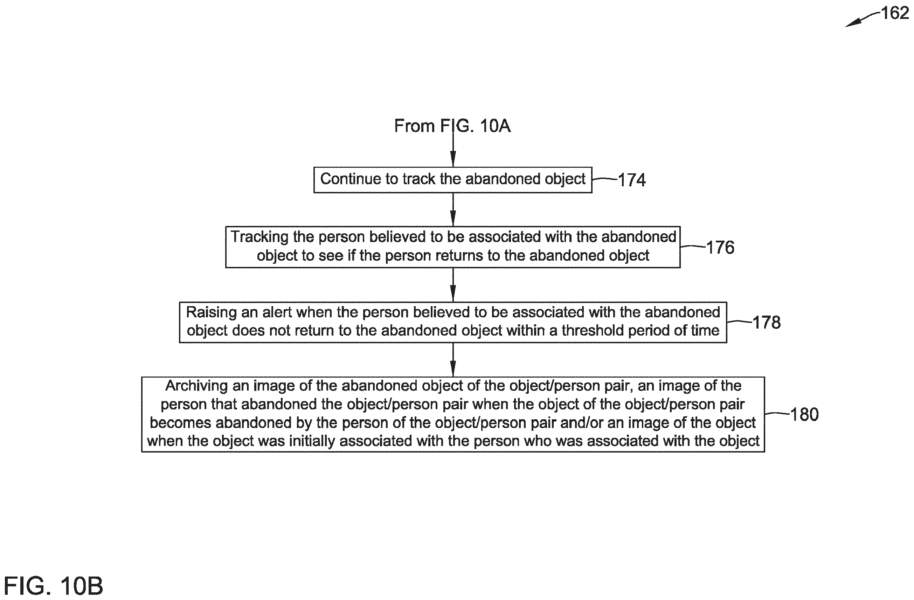

Figures 10A and 10b are flow diagrams that together show an illustrative method 162 for identifying an abandoned object within a video stream that includes a plurality of video frames. The method 162 includes receiving a plurality of video frames of the video stream, as indicated at block 164. Video analytics are performed on one or more of the plurality of video frames to detect possible objects of interest, as indicated at block 166. Video analytics are performed on one or more of the plurality of video frames to detect a person believed to be associated with each of the possible objects of interest, as indicated at block 168. Each possible object of interest and the associated person are tracked through subsequent video frames, as indicated at block 170. The method 162 includes detecting that one or more of the possible objects of interest have been abandoned by the person believed to be associated with that possible object of interest, as indicated at block 172.

The method 162 continues on Figure 10B, where the abandoned object is continued to be tracked, as indicated at block 174. The person believed to be associated with the abandoned object is also tracked to see if the person returns to the abandoned object, as indicated at block 176. An alert is raised when the person believed to be associated with the abandoned object does not return to the abandoned object within a threshold period of time, as indicated at block 178.

In some cases, the alert may identify the abandoned object and the person that is believed to be associated with the abandoned object. In some cases, the alert may identify a current location of the abandoned object and/or the current location of the person that is believed to be associated with the abandoned object. In some cases, the method 162 further includes archiving an image of the abandoned object, an image of the person believed to be associated with the abandoned object and/or an image of the object when the object was initially associated with the person who was associated with the object, as indicated at block 180.

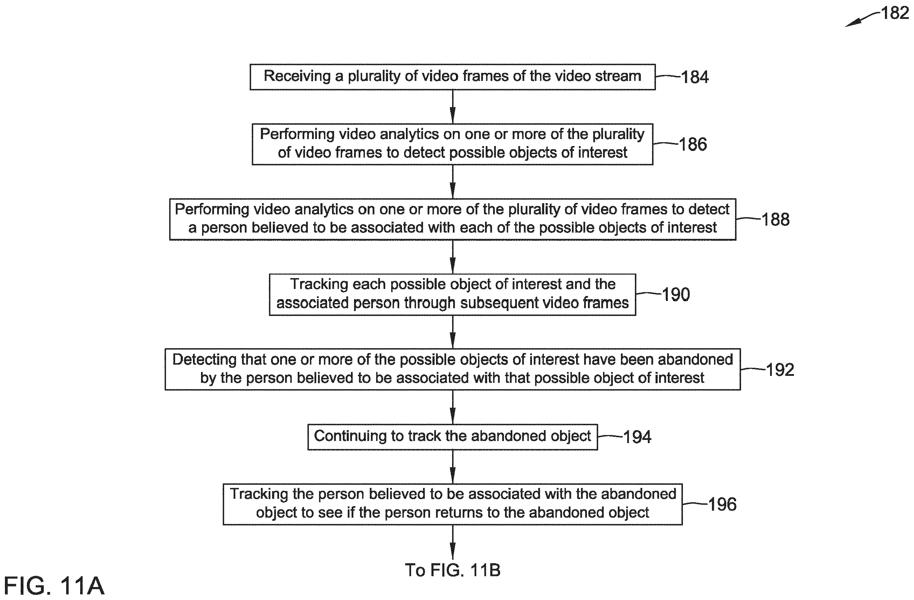

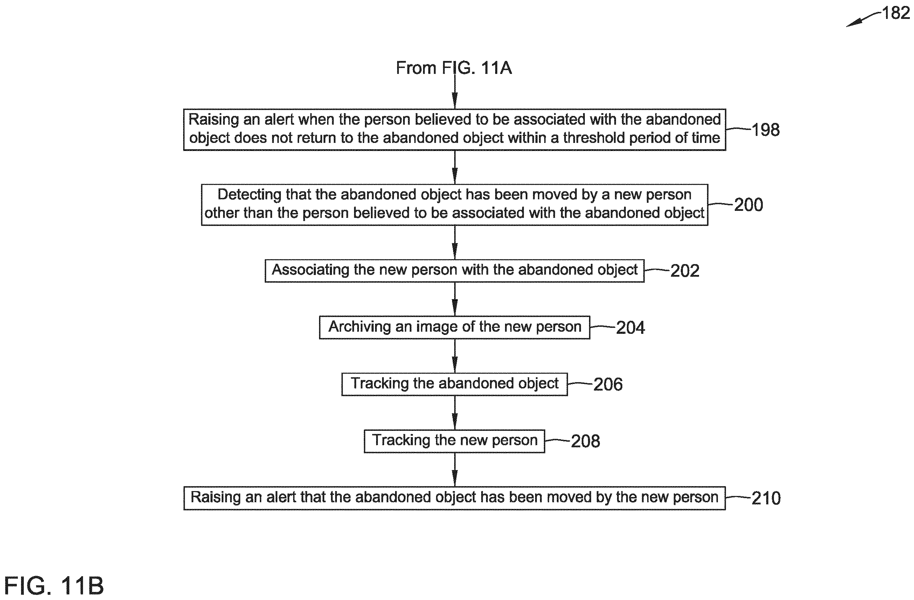

Figures 11A and 11B are flow diagrams that together show an illustrative method 182 for identifying an abandoned object within a video stream that includes a plurality of video frames. The method 182 includes receiving a plurality of video frames of the video stream, as indicated at block 184. Video analytics are performed on one or more of the plurality of video frames to detect possible objects of interest, as indicated at block 186. Video analytics are performed on one or more of the plurality of video frames to detect a person believed to be associated with each of the possible objects of interest, as indicated at block 188. Each possible object of interest and the associated person are tracked through subsequent video frames, as indicated at block 190. The method 182 further includes detecting that one or more of the possible objects of interest have been abandoned by the person believed to be associated with that possible object of interest, as indicated at block 192. The abandoned object is continued to be tracked, as indicated at block 194. The person believed to be associated with the abandoned object is tracked to see if the person returns to the abandoned object, as indicated at block 196.

The method 182 continues on Figure 11B, where an alert is raised when the person believed to be associated with the abandoned object does not return to the abandoned object within a threshold period of time, as indicated at block 198. In some cases, the alert may identify one or more of the abandoned object and the person that is believed to be associated with the abandoned object. The method 182 further includes detecting that the abandon object has been moved by a new person other than the person believed to be associated with the abandoned object, as indicated at block 200. The new person is associated with the abandoned object, as indicated at block 202. An image of the new person is archived, as indicated at block 204. The abandoned object is tracked, as indicated at block 206. The new person is tracked, as indicated at block 208. An alert is raised that the abandoned object has been moved by the new person, as indicated at block 210. The alert may indicate the current location of the abandoned object and the current location of the new person.

Those skilled in the art will recognize that the present disclosure may be manifested in a variety of forms other than the specific embodiments described and contemplated herein. Accordingly, departure in form and detail may be made without departing from the scope and spirit of the present disclosure as described in the appended claims.

## Claims

1. A method for identifying an abandoned object in a video stream captured by a video camera, the method comprising:

    receiving a plurality of video frames of the video stream;

performing video analytics on one or more of the plurality of video frames to detect one or more objects in the video stream;

performing video analytics on one or more of the plurality of video frames to detect one or more persons in the video stream;

identifying an object-person association between one of the objects detected in the video stream and one of the persons detected in the video stream, resulting in an object/person pair;

with the object-person pair identified, tracking the object of the object/person pair and the person of the object/person pair through subsequent video frames; and

based on the tracking of the object of the object/person pair and the tracking of the person of the object/person pair, determining when the object of the object/person pair becomes abandoned by the person of the object/person pair.

2. The method of claim 1, further comprising issuing an alert when the object of the object/person pair becomes abandoned by the person of the object/person pair.

3. The method of claim 2, wherein the alert identifies:

the abandoned object of the object/person pair; and
the person that abandoned the object of the object/person pair.

4. The method of claim 1, further comprising:
archiving an image of the abandoned object of the object/person pair and an image of the person that abandoned the object of the object/person pair when the object of the object/person pair becomes abandoned by the person of the object/person pair.

5. The method of claim 1, wherein after the object of the object/person pair becomes abandoned by the person of the object/person pair, the method comprises:

continuing to track the abandoned object of the object/person pair;
continuing to track the person that abandoned the object of the object/person pair; and
based on the continued tracking of the abandoned object of the object/person pair and the person that abandoned the object of the object/person pair, determining whether the person that abandoned the object of the object/person pair returns to the abandoned object of the object/person pair, and if so, determining that the abandoned object of the object/person pair is no longer abandoned by the person of the object/person pair.

6. The method of claim 1, wherein identifying the object-person association comprises:

determining that the object of the object/person pair and the person of the object/person pair are simultaneously present in the video stream; and
determining that the object of the object/person pair and the person of the object/person pair are within a threshold distance of one another for at least a threshold amount of time.

7. The method of claim 1, wherein identifying the object-person association comprises:

tracking a direction of travel of the object of the object/person pair and tracking a direction of travel of the person of the object/person pair across two or more video frames; and
determining that the direction of travel of the object of the object/person pair and the direction of travel of the person of the object/person pair deviate by less than a travel direction deviation threshold.

8. The method of claim 1, wherein identifying the object-person association comprises:

identifying a degree of overlap of the object of the object/person pair and the person of the object/person pair; and
determining that the degree of overlap is greater than an degree of overlap threshold.

9. The method of claim 1, wherein identifying the object-person association comprises:

determining an estimated relative depth of the object of the object/person pair from the video camera;
determining an estimated relative depth of the person of the object/person pair from the video camera; and

determining that the estimated relative depth of the object of the object/person pair and the estimated relative depth of the person of the object/person pair are within a depth threshold of each other.

10. The method of claim 1, comprising:

tracking one or more objects in the video stream, resulting in one or more tracked objects;
failing to identify a missing one of the previously tracked objects in one or more video frames;
identifying a new tracked object in a subsequent video frame after failing to identify the missing one of the previously tracked objects;
determining that the new tracked object corresponds to the missing one of the previously tracked objects; and
re-identifying the new tracked object as the missing one of the previously tracked objects.

11. The method of claim 1, wherein determining when the object of the object/person pair becomes abandoned by the person of the object/person pair comprises:

determining a separation distance threshold between the object of the object/person pair and the person of the object/person pair, the separation distance threshold is based at least in part on a size of the object of the object/person pair in the video stream;
determining that the object of the object/person pair becomes abandoned by the person of the object/person pair when:

the object of the object/person pair is stationary for at least a stationary time threshold; and
the person of the object/person pair and the object of the object/person pair remain separated by at least the separation distance threshold for at least a separation time threshold.

12. A security system comprising:

a video camera for producing a video stream;
a controller operatively coupled to the video camera, the controller configured to:

receive a plurality of video frames of the video stream;
perform video analytics on one or more of the plurality of video frames to detect one or more objects in the video stream;
perform video analytics on one or more of the plurality of video frames to detect one or more persons in the video stream;
identify an object-person association between one of the objects detected in the video stream and one of the persons detected in the video stream, resulting in an object/person pair;
track the object of the object/person pair and the person of the object/person pair through subsequent video frames;
based on the track of the object of the object/person pair and the track of the person of the object/person pair, determine when the object of the object/person pair becomes abandoned by the person of the object/person pair; and
issue an alert when the object of the object/person pair becomes abandoned by the person of the object/person pair.

13. The security system of claim 12, wherein the alert identifies:

the abandoned object of the object/person pair; and
the person that abandoned the object of the object/person pair.

14. The security system of claim 12, wherein the controller is further configured to:
archive an image of the abandoned object of the object/person pair and an image of the person that abandoned the object of the object/person pair when the object of the object/person pair becomes abandoned by the person of the object/person pair.

15. The security system of claim 12, wherein after the object of the object/person pair becomes abandoned by the person of the object/person pair, the controller is configured to:

continue to track the abandoned object of the object/person pair;

continue to track the person that abandoned the object of the object/person pair; and based on the continued tracking of the abandoned object of the object/person pair and the person that abandoned the object of the object/person pair, determine whether the person that abandoned the object of the object/person pair returns to the abandoned object of the object/person pair, and if so, determining that the abandoned object of the object/person pair is no longer abandoned by the person of the object/person pair.

FIG. 1

Receiving a plurality of video frames of the video stream —20

Performing video analytics on one or more of the plurality of video frames to detect one or more objects in the video stream —22

Performing video analytics on one or more of the plurality of video frames to detect one or more persons in the video stream —24

Identifying an object-person association between one of the objects detected in the video stream and one of the persons detected in the video stream, resulting in an object/person pair —26

Sphere of influence

26a

With the object-person pair identified, tracking the object of the object/person pair and the person of the object/person pair through subsequent video frames —28

To FIG. 2B

FIG. 2A

From FIG. 2A

Based on the tracking of the object of the object/person pair and the tracking of the person of the object/person pair, determining when the object of the object/person pair becomes abandoned by the person of the object/person pair —30

Dynamic thresholding 30a   Displacement threshold 30b

Issuing an alert when the object of the object/person pair becomes abandoned by the person of the object/person pair —32

Archiving an image of the abandoned object of the object/person pair, an image of the person that abandoned the object/person pair when the object of the object/person pair becomes abandoned by the person of the object/person pair and/or an image of the object when the object was initially associated with the person who was associated with the object —34

Absorbing objects into the background —35

FIG. 2B

EP 4 303 832 A1

```
                                                          ┌─36

┌────────────────────────────────────────────────┐
│ Receiving a plurality of video frames of the video stream │──38
└────────────────────────────────────────────────┘
                          │
                          ▼
┌────────────────────────────────────────────────┐
│ Performing video analytics on one or more of the plurality of │──40
│ video frames to detect one or more objects in the video stream │
└────────────────────────────────────────────────┘
                          │
                          ▼
┌────────────────────────────────────────────────┐
│ Performing video analytics on one or more of the plurality of │──42
│ video frames to detect one or more persons in the video stream │
└────────────────────────────────────────────────┘
                          │
                          ▼
┌────────────────────────────────────────────────────────┐
│ Identifying an object-person association between one of the objects detected in the video │──44
│ stream and one of the persons detected in the video stream, resulting in an object/person pair │
└────────────────────────────────────────────────────────┘
                          │
                          ▼
┌────────────────────────────────────────────────┐
│ With the object-person pair identified, tracking the object of the object/person │──46
│ pair and the person of the object/person pair through subsequent video frames │
└────────────────────────────────────────────────┘
                          │
                          ▼
┌────────────────────────────────────────────────┐
│ Based on the tracking of the object of the object/person pair and the tracking of │
│ the person of the object/person pair, determining when the object of the │──48
│ object/person pair becomes abandoned by the person of the object/person pair │
└────────────────────────────────────────────────┘
                          │
                          ▼
                    To FIG. 3B
```

FIG. 3A

From FIG. 3A

| Continuing to track the abandoned object of the object/person pair |—50

| Continuing to track the person that abandoned the object of the object/person pair |—52

| Based on the continued tracking of the abandoned object of the object/person pair and the person that abandoned the object of the object/person pair, determining whether the person that abandoned the object of the object/person pair returns to the abandoned object of the object/person pair, and if so, determining that the abandoned object of the object/person pair is no longer abandoned by the person of the object/person pair |—54

FIG. 3B

EP 4 303 832 A1

```
                                                              ⟋─56

  ┌──────────────────────────────────────────────┐
  │ Receiving a plurality of video frames of the video stream │──58
  └──────────────────────────────────────────────┘
                          │
                          ▼
  ┌──────────────────────────────────────────────┐
  │ Performing video analytics on one or more of the plurality of │──60
  │ video frames to detect one or more objects in the video stream │
  └──────────────────────────────────────────────┘
                          │
                          ▼
  ┌──────────────────────────────────────────────┐
  │ Performing video analytics on one or more of the plurality of │──62
  │ video frames to detect one or more persons in the video stream │
  └──────────────────────────────────────────────┘
                          │
                          ▼
  ┌──────────────────────────────────────────────┐
  │ Identifying that the object of an object/person pair and the person of │──64
  │ the object/person pair are simultaneously present in the video stream │
  └──────────────────────────────────────────────┘
                          │
                          ▼
  ┌──────────────────────────────────────────────────────────┐
  │ Identifying that the object of the object/person pair and the person of the object/person pair are within a │──66
  │ threshold distance of one another for at least a threshold amount of time, resulting in an object/person pair │
  └──────────────────────────────────────────────────────────┘
                          │
                          ▼
  ┌──────────────────────────────────────────────┐
  │ With the object-person pair identified, tracking the object of the object/person │──68
  │ pair and the person of the object/person pair through subsequent video frames │
  └──────────────────────────────────────────────┘
                          │
                          ▼
  ┌──────────────────────────────────────────────┐
  │ Based on the tracking of the object of the object/person pair and the tracking of │
  │ the person of the object/person pair, determining when the object of the │──70
  │ object/person pair becomes abandoned by the person of the object/person pair │
  └──────────────────────────────────────────────┘
```

FIG. 4

Receiving a plurality of video frames of the video stream —74

Performing video analytics on one or more of the plurality of video frames to detect one or more objects in the video stream —76

Performing video analytics on one or more of the plurality of video frames to detect one or more persons in the video stream —78

Tracking a direction of travel of the object of the object/person pair and tracking a direction of travel of the person of the object/person pair across two or more video frames —80

Identifying that the direction of travel of the object of the object/person pair and the direction of travel of the person of the object/person pair deviate by less than a travel direction deviation threshold, resulting in an object/person pair —82

With the object-person pair identified, tracking the object of the object/person pair and the person of the object/person pair through subsequent video frames —84

Based on the tracking of the object of the object/person pair and the tracking of the person of the object/person pair, determining when the object of the object/person pair becomes abandoned by the person of the object/person pair —86

FIG. 5

```
                                  ┌──────────────────────────────────────────────┐
                                  │ Receiving a plurality of video frames of the   │──90
                                  │ video stream                                   │
                                  └──────────────────────────────────────────────┘
                                                      │
                                                      ▼
                                  ┌──────────────────────────────────────────────┐
                                  │ Performing video analytics on one or more of   │──92
                                  │ the plurality of video frames to detect one    │
                                  │ or more objects in the video stream            │
                                  └──────────────────────────────────────────────┘
                                                      │
                                                      ▼
                                  ┌──────────────────────────────────────────────┐
                                  │ Performing video analytics on one or more of   │──94
                                  │ the plurality of video frames to detect one    │
                                  │ or more persons in the video stream            │
                                  └──────────────────────────────────────────────┘
                                                      │
                                                      ▼
                                  ┌──────────────────────────────────────────────┐
                                  │ Identifying a degree of overlap of the object  │──96
                                  │ of the object/person pair and the person of    │
                                  │ the object/person pair                         │
                                  └──────────────────────────────────────────────┘
                                                      │
                                                      ▼
                                  ┌──────────────────────────────────────────────┐
                                  │ Determining that the degree of overlap is      │──98
                                  │ greater than a degree of overlap threshold,    │
                                  │ resulting in an object/person pair             │
                                  └──────────────────────────────────────────────┘
                                                      │
                                                      ▼
                                  ┌──────────────────────────────────────────────┐
                                  │ With the object-person pair identified,        │──100
                                  │ tracking the object of the object/person pair  │
                                  │ and the person of the object/person pair       │
                                  │ through subsequent video frames                │
                                  └──────────────────────────────────────────────┘
                                                      │
                                                      ▼
                                  ┌──────────────────────────────────────────────┐
                                  │ Based on the tracking of the object of the     │──102
                                  │ object/person pair and the tracking of the     │
                                  │ person of the object/person pair, determining  │
                                  │ when the object of the object/person pair      │
                                  │ becomes abandoned by the person of the         │
                                  │ object/person pair                             │
                                  └──────────────────────────────────────────────┘
```

88

FIG. 6

EP 4 303 832 A1

```
┌─────────────────────────────────────────────────────┐
│ Receiving a plurality of video frames of the video stream │──106
└─────────────────────────────────────────────────────┘
                          │
                          ▼
┌─────────────────────────────────────────────────────┐
│ Performing video analytics on one or more of the plurality of │──108
│ video frames to detect one or more objects in the video stream │
└─────────────────────────────────────────────────────┘
                          │
                          ▼
┌─────────────────────────────────────────────────────┐
│ Performing video analytics on one or more of the plurality of │──110
│ video frames to detect one or more persons in the video stream │
└─────────────────────────────────────────────────────┘
                          │
                          ▼
┌─────────────────────────────────────────────────────┐
│ Determining an estimated relative depth of the object │──112
│ of the object/person pair from the video camera │
└─────────────────────────────────────────────────────┘
                          │
                          ▼
┌─────────────────────────────────────────────────────┐
│ Determining an estimated relative depth of the person │──114
│ of the object/person pair from the video camera │
└─────────────────────────────────────────────────────┘
                          │
                          ▼
                    To FIG. 7B
```

104

FIG. 7A

From FIG. 7A

Determining that the estimated relative depth of the object of the object/person pair and the estimated relative depth of the person of the object/person pair are within a depth threshold of each other, resulting in an object/person pair ⎯116

With the object-person pair identified, tracking the object of the object/person pair and the person of the object/person pair through subsequent video frames ⎯118

Based on the tracking of the object of the object/person pair and the tracking of the person of the object/person pair, determining when the object of the object/person pair becomes abandoned by the person of the object/person pair ⎯120

FIG. 7B

⎯104

Receiving a plurality of video frames of the video stream —124

Performing video analytics on one or more of the plurality of video frames to detect one or more objects in the video stream —126

Performing video analytics on one or more of the plurality of video frames to detect one or more persons in the video stream —128

Identifying an object-person association between one of the objects detected in the video stream and one of the persons detected in the video stream, resulting in an object/person pair —130

With the object-person pair identified, tracking the object of the object/person pair and the person of the object/person pair through subsequent video frames —132

Based on the tracking of the object of the object/person pair and the tracking of the person of the object/person pair, determining when the object of the object/person pair becomes abandoned by the person of the object/person pair —134

To FIG. 8B

FIG. 8A

From FIG. 8A

Tracking one or more objects in the video stream, resulting in one or more tracked objects —136

Failing to identify a missing one of the previously tracked objects in one or more video frames —138

Identifying a new tracked object in a subsequent video frame after failing to identify the missing one of the previously tracked objects —140

Determining that the new tracked object corresponds to the missing one of the previously tracked objects —142

Re-identifying the new tracked object as the missing one of the previously tracked objects —144

FIG. 8B

EP 4 303 832 A1

146

Receiving a plurality of video frames of the video stream —148

↓

Performing video analytics on one or more of the plurality of video frames to detect one or more objects in the video stream —150

↓

Performing video analytics on one or more of the plurality of video frames to detect one or more persons in the video stream —152

↓

Identifying an object-person association between one of the objects detected in the video stream and one of the persons detected in the video stream, resulting in an object/person pair —154

↓

With the object-person pair identified, tracking the object of the object/person pair and the person of the object/person pair through subsequent video frames —156

↓

To FIG. 9B

FIG. 9A

EP 4 303 832 A1

146

From FIG. 9A

Determining a separation distance threshold between the object of the object/person pair and the person of the object/person pair, the separation distance threshold is based at least in part on a size of the object of the object/person pair in the video stream —158

Determining that the object of the object/person pair becomes abandoned by the person of the object/person pair when:

The object of the object/person pair is stationary for at least a stationary time threshold —160a

The person of the object/person pair and the object of the object/person pair remain separated by at least the separation distance threshold for at least a separation time threshold —160b

—160

FIG. 9B

162

Receiving a plurality of video frames of the video stream —164

Performing video analytics on one or more of the plurality of video frames to detect possible object of interest —166

Performing video analytics on one or more of the plurality of video frames to detect a person believed to be associated with each of the possible objects of interest —168

Tracking each possible object of interest and the associated person through subsequent video frames —170

Detecting that one or more of the possible objects of interest have been abandoned by the person believed to be associated with that possible object of interest —172

To FIG. 10B

FIG. 10A

EP 4 303 832 A1

162

From FIG. 10A

Continue to track the abandoned object —174

Tracking the person believed to be associated with the abandoned object to see if the person returns to the abandoned object —176

Raising an alert when the person believed to be associated with the abandoned object does not return to the abandoned object within a threshold period of time —178

Archiving an image of the abandoned object of the object/person pair, an image of the person that abandoned the object/person pair when the object of the object/person pair becomes abandoned by the person of the object/person pair and/or an image of the object when the object was initially associated with the person who was associated with the object —180

FIG. 10B

Receiving a plurality of video frames of the video stream — 184

Performing video analytics on one or more of the plurality of video frames to detect possible objects of interest — 186

Performing video analytics on one or more of the plurality of video frames to detect a person believed to be associated with each of the possible objects of interest — 188

Tracking each possible object of interest and the associated person through subsequent video frames — 190

Detecting that one or more of the possible objects of interest have been abandoned by the person believed to be associated with that possible object of interest — 192

Continuing to track the abandoned object — 194

Tracking the person believed to be associated with the abandoned object to see if the person returns to the abandoned object — 196

To FIG. 11B

FIG. 11A

From FIG. 11A

Raising an alert when the person believed to be associated with the abandoned object does not return to the abandoned object within a threshold period of time —198

Detecting that the abandoned object has been moved by a new person other than the person believed to be associated with the abandoned object —200

Associating the new person with the abandoned object —202

Archiving an image of the new person —204

Tracking the abandoned object —206

Tracking the new person —208

Raising an alert that the abandoned object has been moved by the new person —210

FIG. 11B

Europäisches
Patentamt

European
Patent Office

Office européen
des brevets

# EUROPEAN SEARCH REPORT

**Application Number**

**EP 23 18 0229**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/193166 A1 (RUSSO PIETRO [US] ET AL) 18 June 2020 (2020-06-18) | 1-10, 12-15 | INV.<br>G06V20/52<br>G06V20/40<br>G06V40/10 |
| A | * abstract *<br>* figure 5 *<br>* paragraph [0057] – paragraph [0060] *<br>* paragraph [0094] – paragraph [0110] *<br>----- | 11 | |
| A | US 2018/374233 A1 (ZHOU YANG [US] ET AL) 27 December 2018 (2018-12-27)<br>* the whole document *<br>----- | 1-15 | |

**TECHNICAL FIELDS SEARCHED (IPC)**

G06V

The present search report has been drawn up for all claims

| Place of search | Date of completion of the search | Examiner |
|---|---|---|
| The Hague | 21 September 2023 | Martinez, Francis |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 18 0229

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2023

| Patent document cited in search report | | Publication date | Patent family member(s) | | Publication date |
|---|---|---|---|---|---|
| US 2020193166 | A1 | 18-06-2020 | US 2020193166 | A1 | 18-06-2020 |
| | | | WO 2020118430 | A1 | 18-06-2020 |
| US 2018374233 | A1 | 27-12-2018 | US 2018374233 | A1 | 27-12-2018 |
| | | | WO 2019005291 | A1 | 03-01-2019 |

EPO FORM P0459

For more details about this annex : see Official Journal of the European Patent Office, No. 12/82